(19) Europäisches Patentamt
European Patent Office
Office européen des brevets

(11) **EP 4 443 104 B1**

(12) **EUROPEAN PATENT SPECIFICATION**

(45) Date of publication and mention
of the grant of the patent:
**23.07.2025  Bulletin 2025/30**

(21) Application number: **23166295.8**

(22) Date of filing: **03.04.2023**

(51) International Patent Classification (IPC):
**G01B 21/32** *(2006.01)*       **G01B 7/16** *(2006.01)*
**G01P 3/44** *(2006.01)*

(52) Cooperative Patent Classification (CPC):
**G01B 21/32; G01B 7/22**

(54) **METHOD AND DEVICE FOR ESTIMATING  A RADIAL DEFORMATION OF A ROTARY SHAFT**

VERFAHREN UND VORRICHTUNG ZUR SCHÄTZUNG EINER RADIALEN VERFORMUNG EINER DREHWELLE

PROCÉDÉ ET DISPOSITIF D'ESTIMATION D'UNE DÉFORMATION RADIALE D'UN ARBRE ROTATIF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**09.10.2024  Bulletin 2024/41**

(73) Proprietor: **ABB SCHWEIZ AG**
**5400 Baden (CH)**

(72) Inventor: **SAARINEN, Kari**
**08800 Lohja (FI)**

(74) Representative: **Kransell & Wennborg KB**
**P.O. Box 27834**
**115 93 Stockholm (SE)**

(56) References cited:
**EP-A1- 2 218 881         CN-B- 112 504 155**
**DE-A1- 102013 110 632     JP-A- H11 230 733**
**US-A1- 2022 325 372**

## Description

### TECHNICAL FIELD

The present disclosure relates to the field of measuring arrangements for measuring contours of physical objects. In particular, it proposes novel techniques for estimating a radial deformation of a rotary shaft in a loaded condition.

### BACKGROUND

For many industrial applications, electric motors are key components which are expected to be very reliable. Because it is well known that every motor breaks down sooner or later, there is a long-standing development in industry to move from reactive maintenance of critical equipment towards preventive or proactive maintenance. These more recent options may lead to the replacing of old though fully functional components, which is not always defendable from a financial or sustainability point of view. It would be even better, indeed, to detect non-ideal operation conditions early - before they manifest themselves as faults that hamper productive operation - and use them as triggers to take suitable maintenance actions.

The moving rotor is a primary source of forces and vibrations in the electric motor. The shaft transmits these forces to the bearings, which act as flexible fulcrums during operation. Since the (radial) displacement of the shaft in relation with the bearing housing depends on the force acting on the shaft and the stiffness of the bearing, the shaft displacement sensor could theoretically be an ideal type of measurement for condition monitoring. Indeed, the contributions to the radial deformation include several potential threats to the good onward functioning of the motor:

1. The cross section of the shaft is (intentionally or unintentionally) not circular.

2. The shaft has an uneven surface.

3. The shaft is not rectilinear, e.g., it has bends. This could lead to an oscillatory behavior, the amplitude of which has a linear dependence on the axial coordinate.

4. The shaft is eccentrically mounted relative to the axis of rotation.

5. The rotation is imperfect, e.g., it is uneven as a result of drive bearing performance, machine structure, drive alignment (tilt).

6. The bearings have a nonzero radial runout or a nonzero face runout, or both. Radial runout can be defined as the variation in wall thickness in a bearing face. The runout may be related to the dimension of the raceway in which the rolling element rides and how it relates to the outer ring's outer diameter and the inner ring's inner diameter as the bearing is rotated one revolution.

In addition to this list, the displacement of the shaft related to the bearing housing also depends on the force acting on the shaft and the bearing stiffness.

The contributions to the radial deformation may be categorized with respect to synchronicity. More precisely, while some components, such as shaft out-of-roundness or drive tilt, will repeat at certain angular locations of the rotation (synchronous error motions), other deformation components, such as bearing frequencies generated by out-of-roundness of rolling elements in the bearing, are cyclical but do not repeat at the same angular locations (asynchronous error motions).

Workable techniques for measuring the radial displacement of the shaft have hitherto been missing, however.

DE10213110632A1 discloses a method according to the preamble of claim 1. The method includes one or more reference runs, during which a basic distance to a moving rotor at low angular speed is captured using contactless sensors, followed by a deformation measurement at significantly higher speed. By means of a contactless zero-marker sensor, the distance measurements can be performed as a function of the angle, and averaging is performed over consecutive revolutions. The angle-dependent deformation is computed, for each angle value, as the difference of the captured (revolution-averaged) distances. A corresponding measurement setup is disclosed.

CN112504155B discloses a method for measuring a deformed diameter of a rotating computer tomography rotor using laser scanning. An average distance L2 to the rotor is measured at high speed, at which the deformation of interest is expected to occur, an average distance L1 is measured at low speed, and the difference $\Delta L = L2 - L1$ is used in the further calculations.

US2022325372A1 discloses a metallurgic process which includes a step of rotating a metal part at high angular speed in order to deform the part plastically for thereby relieving residual stresses in the part. To be able to apply the desired amount of plastic deformation, the radial enlargement of the part is measured both in an unloaded condition and at angular speeds in the expected range, and the measurement data is fitted to a simple model. The radial enlargement is measured by laser, a capacitive sensor or an eddy current inductive sensor.

JP-H11-230733A discloses a device for measuring a deflection of a rotating body.

EP2218881A1 discloses a method for online calibration of a sensor, which is designed to measure a distance to a test surface.

## SUMMARY

One objective of the present disclosure is to make available a method for estimating a radial deformation of a rotary shaft in a loaded condition. A further objective is to estimate the radial deformation while the rotary shaft is loaded by dynamic forces, especially dynamic forces generated by an ongoing movement. A further objective is to make available a method that is robust to local irregularities on the surface of the shaft and/or fluctuations in angular speed. A further objective is to make available a method capable of excellent dimensional accuracy with respect to the radial direction. A further objective is to organize the computations within such a method in an efficient and accurate way. A still further objective is to propose a processor configured to estimate a radial deformation of a rotary shaft in a loaded condition with these advantages.

At least some of these objectives are achieved by the invention as defined by the independent claims. The dependent claims relate to advantageous embodiments.

In a first aspect of the present disclosure, according to claim 1, there is provided a method of estimating a radial deformation of a rotary shaft in a loaded condition.

The inventor has realized, and experimentally demonstrated, that faults appearing in the low-frequency part of the vibration spectrum, such as unbalances, misalignment, can be detected and assessed using displacement sensors more reliably and accurately than by accelerometers. Furthermore, the inventor has observed a very good correlation ($r^2 = 0.99$) between the radial load on the bearing and the shaft displacement, which enables load estimation. Any errors resulting from static forces or unevenness of the shaft surface will cancel out thanks to the differential measuring technique. These insights form the basis of a novel way of using displacement sensors to detect major potential problems in the motor, as well as early non-ideal operation conditions.

In some embodiments, the method includes a step of identifying local irregularities in the recorded radial displacement and replacing these with interpolated data or a template shape before computing the radial deformation. Alternatively, the recorded radial displacement can be processed by a regularization operation. Such substitution or regularization can be a way to remove sharp spikes, which could otherwise cause significant errors in the runout compensation in setups where synchronization is not perfect.

In some embodiments, the first or second shape description includes a harmonic-analysis representation. Such representations have been found to be well suited for describing the shape of the deformed shaft, notably if the shaft has a nominally circular shape, and the representations cover a large class of shaft geometries.

In a second aspect of the present disclosure, according to claim 11, there is provided a processor configured to estimate a radial deformation of a rotary shaft in a loaded condition.

Generally speaking, the processor according to the second aspect is associated with the same advantages and effects as the method of the first aspect, and it can be implemented with a corresponding degree of technical variation.

The disclosure further relates to a computer program containing instructions for causing a computer, or the processor of the second aspect in particular, to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order described, unless this is explicitly stated.

## BRIEF DESCRIPTION OF THE DRAWINGS

Aspects and embodiments are now described, by way of example, with reference to the accompanying drawings, on which:

figure 1 is a flowchart representing methods for estimating a radial deformation of a rotary shaft in a loaded condition, according to embodiments herein;

figure 2 shows a measuring arrangement and an associated controller;

figure 3a shows a two-dimensional geometric point set which is star-shaped relative to the origin O;

figure 3b shows a two-dimensional geometric point set which is not star-shaped relative to the origin O;

figure 4 is a plot of a simulated displacement measurement error (unit: 1 mm) versus shaft angle (unit: 1 radian);

figure 5 is a plot of a randomly generated shaft cross section radius (unit: 1 $\mu$m) versus shaft angle (unit: 1 degree) on which the simulation reported in figure 4 was based;

figure 6 illustrates a sub-process of replacing of an identified local irregularity with interpolated data or with a template shape;

figure 7 illustrates a sub-process of radial calibration on the basis of an artificial or accidental structure with a known radial height or depth;

figures 8 and 9 are plots of x and y displacements, respectively, each displacement measured by a commercial sensor; and

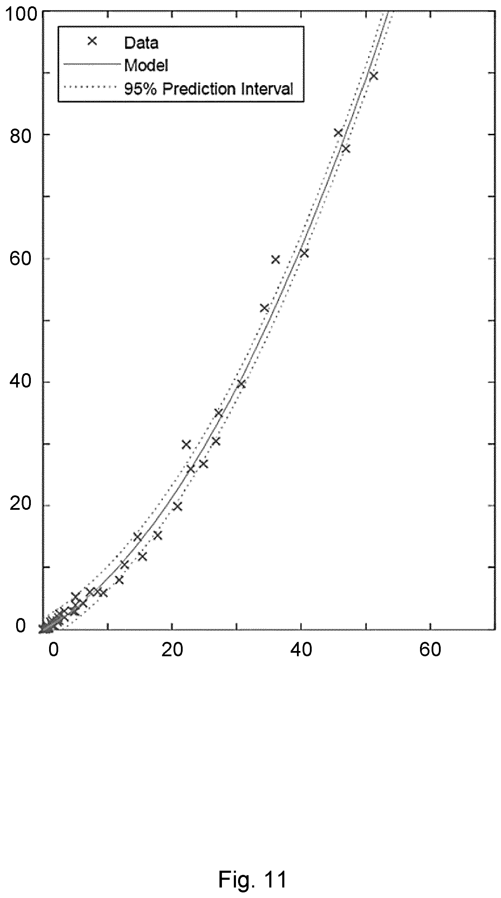

figures 10 and 11, for the x and y directions respectively, are plots of sensed displacement versus unbalance force.

## DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

### System overview

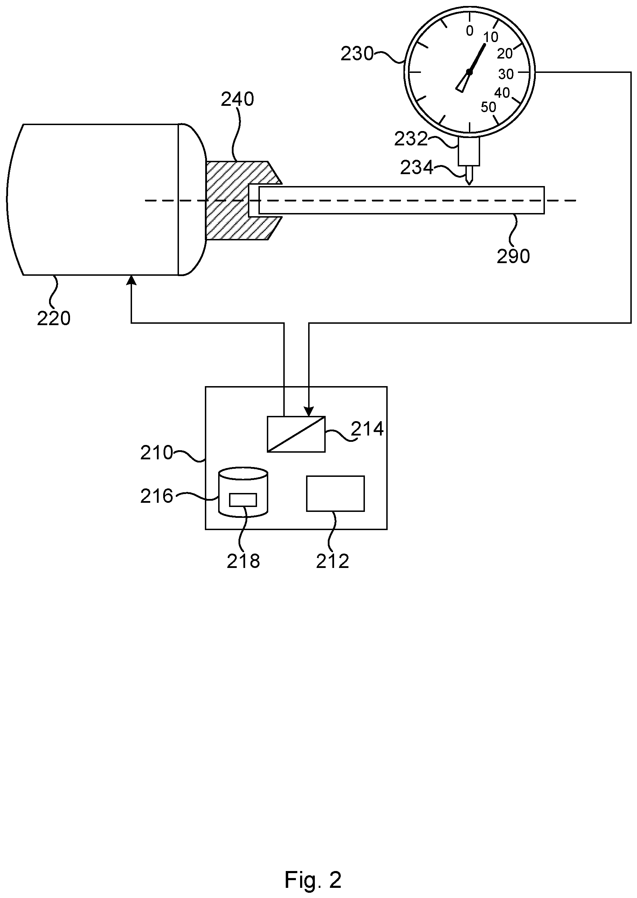

Figure 2 shows a motor 220 arranged to rotate a rotary shaft 290, a displacement instrument 230 arranged to record a radial displacement of the shaft 290, and an associated controller 210. For the purposes of this description, it is assumed that the shaft 290 has a nominally circular cross section and has a nominally rectilinear axis. The shaft 290 is secured to the motor 220 by means of a fixture 240, such as a releasable chuck. The rotation axis of the motor 220 nominally coincides with the axis of the shaft 290, these axes drawn by a common dashed line in figure 2, although mounting errors may be present.

The motor 220 shall be operable to rotate the shaft 290 at variable angular speed. In some envisaged use cases, the motor 220 can be a component in a dedicated measuring arrangement, in which case the sought-for radial deformation is limited to causes related to the shaft 290 itself, such as the presence of bends or material non-homogeneities in the shaft 290. The estimation of said radial deformation could be perturbed to some extent by imperfections in the motor 220, but the aim is normally to eliminate the influence of these perturbations. After the completion of the radial deformation estimation, an operator may take the shaft 290 out of the measuring arrangement and install it in production equipment for use in productive operation.

Alternatively, in other use cases, the motor 220 can be an electric motor which belongs to the actual production equipment. The estimated radial deformation of the shaft 290 will inherently include such deformations that are caused by defects in the motor 220 itself (e.g., damaged bearings) and/or the securing of the shaft 290 to the motor 220 (e.g., it is eccentric or non-parallel to the rotation axis), which realistically predicts the behavior of the production equipment during operation and could indicate the necessary maintenance actions.

The displacement instrument 230 may be composed of a sensor 234 and an optional display 232. The sensor 234 may in turn include one or multiple sub-sensors. Suitable signal processing may be applied for combining primary signals from a plurality of sub-sensors into a joint sensor reading of the displacement. To implement the teachings herein, the use of a contactless sensor 234 is the preferred choice, especially a capacitive sensor. The use of a mechanical sensor, such as a gauge head in contact with the surface of the rotating shaft 290, is not excluded either, particularly if the shaft 290 is to be used at relatively low rpm and has a smooth surface.

From a functional point of view, the displacement sensor 230 may be one satisfying the requirements for shaft runout measurements set forth in the specification ASME/ANSI B5.54-2005, "Methods for Performance Evaluation of Computer Numerically Controlled Machining Centers", although this is not an essential feature of the invention. The ASME/ANSI specification defines *runout* as the total indicator reading (e.g., for one complete revolution) of an instrument measuring against a moving surface. Notwithstanding this definition, in the present disclosure, the term runout may occasionally be used in the broader sense of any positioning error of the shaft relative to the rotation axis, including eccentricity (radial runout), non-parallel orientation (axial runout) and the like.

Finally, the controller 210 in figure 2 is connected, over a data interface 214, to the displacement instrument 230, from which it receives a sensor signal. The sensor signal may represent the momentary distance between a reference point (e.g., the tip of a capacitive sensor head) and the nearest point on the surface of the shaft 290. Over the data interface 214, the controller 210 may further be connected to the motor 220. On the one hand, the controller 210 may be authorized to control the motor 220 (e.g., regarding its angular speed or torque), as suggested by the arrow in figure 2. On the other hand, the controller 210 may be arranged to receive a signal representing an angular position or angular speed of the motor 220; this signal may be supplied as feedback of the action of a control signal supplied to the motor 220. Each of these connections between the controller 210 and motor 220 are optional, namely, in such implementations where the shaft displacement estimation is performed while the motor 220 rotates the shaft at a pre-agreed angular speed. For example, the motor 220 may be arranged to execute a program including rotation of the shaft 290 at the first and the second angular speed in time intervals known to the controller 210; this way, the controller 210 is not required to be authorized to control the motor 220 directly.

The controller 210 further comprises a processor 212 and a memory 216. The processor 212 may include a networked ('cloud') processing resources or may be supported by a networked processing resource. The memory may be used for storing a computer program 218 to be executed by the processor 212 and further for storing shape descriptions of shafts, template shapes, calibration data, and so forth.

## Radial deformation estimation method

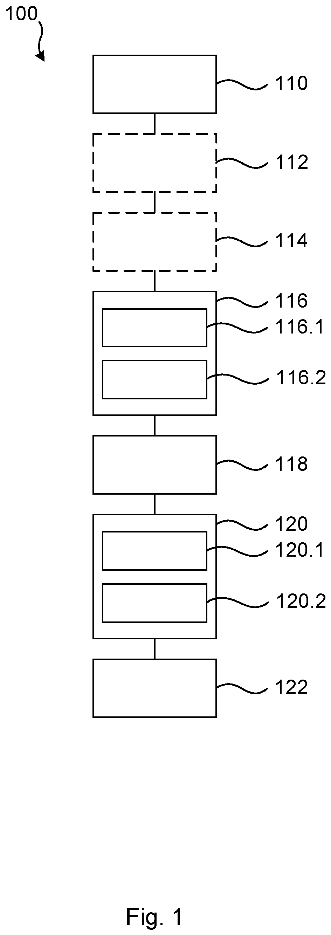

With reference to figure 1, there will now be described a method 100 for estimating a radial deformation of the rotary shaft 290 in a loaded condition, with variations according to embodiments herein. The method 100 can be executed by any suitably situated processor, one that is arranged to receive a signal representing a radial displacement of the shaft 290 as a function of angle and/or time, wherein this displacement is to be captured while the shaft 290 is rotated at one first (lower) angular speed and one second (higher) angular speed. These requirements are met by the processor 214 in figure 2.

The second angular speed is a specified angular speed that corresponds to the loaded condition in which it is desired to estimate the radial deformation of the shaft 290. In the loaded condition, the shaft 290 is acted upon by dynamic forces and torque, such as centripetal forces, with or without precession, or periodic forces due to an imperfect rotational asymmetry. The first angular speed can be a "low" angular speed that corresponds to a relaxed condition of the shaft 290, e.g., a mechanical state such that the dynamic forces and torques acting on the shaft 290 are low enough that their contribution to the total deformation of the shaft 290 can be neglected in the use case at hand. Put differently, the shaft 290 while rotated at the first angular speed shall have approximately the same shape as if the shaft 290 was at rest in the inertial frame used.

In a first step 110 of the method, a first radial displacement of the shaft's 290 surface is recorded while rotating the shaft at a first angular speed corresponding to a relaxed condition of the shaft. If the radial displacement is measured by the deformation instrument 230 in figure 2, the signal may correspond to samples of the distance between the head of a capacitive sensor 234 and the shaft's 290 surface. The recording may be performed by storing the signal temporarily in the memory 216.

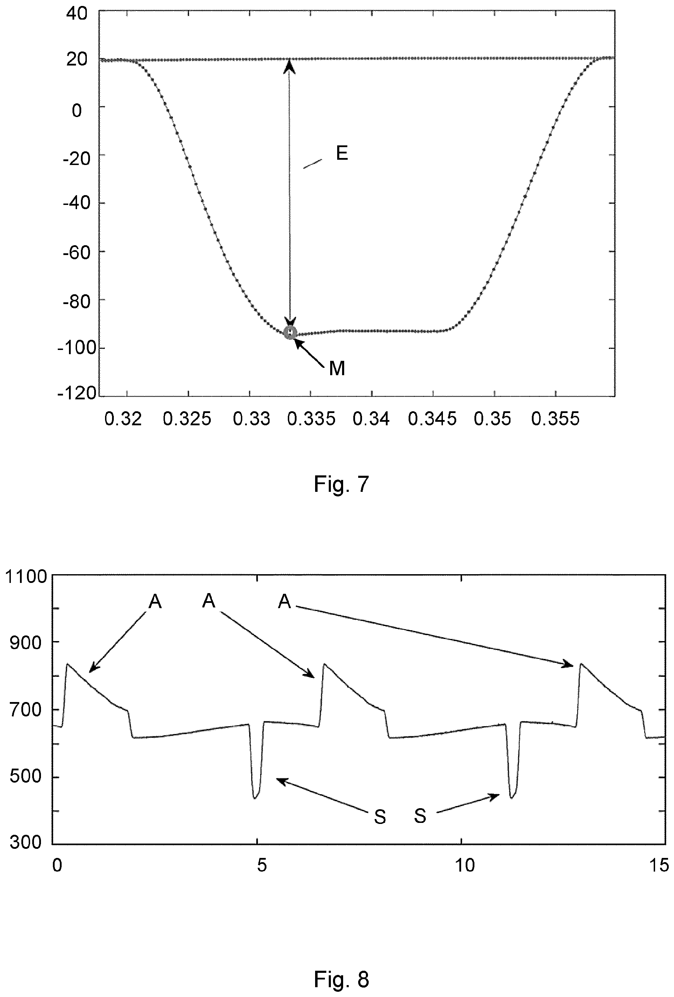

The recorded first radial displacement may be used in the subsequent steps of the present method 100 without any further processing. In some embodiments, however, the recorded first radial displacement is preprocessed for a dimensional calibration and to ensure a linear sensor response of the deformation instrument 230. More precisely, in an optional step 112, a local irregularity in the recorded first radial displacement is tracked, and the local irregularity is identified with a structure that has a known radial dimension. The local irregularity may for example be a repeating waveform occupying a portion of an angular period, such as the waveforms A and S in figure 8. The local irregularity may be positioned in the recorded first radial displacement signal with very high accuracy by locally approximating the recorded first radial displacement signal by a quadratic polynomial and finding its minimum or maximum, as applicable. The structure with the known radial dimension may be a metallic strip with a known thickness that an operator has attached to the shaft 290 for the purpose of the calibration. Alternatively, it may be an artificial or accidental depression (e.g., a machined notch or groove) of known depth. The calibration sub-process, when based on a depression, is illustrated in figure 7, where the horizontal axis represents recording time (unit: 1 second, which is equivalent to an angle at constant angular speed), and the vertical axis represents a radial displacement signal to be calibrated. A local minimum may be identified M by a local quadratic polynomial approximation, as mentioned. At the local minimum M, the signal's drop from the steady-state value ($E \approx 20 - (-95) = 115$ units) corresponds to the known depth of the notch. On this basis, in a step 114, the recorded first radial displacement is scaled to match said known depth dimension. Uniform scaling may be used, and the scaling coefficient may correspond to the ratio of the known radial dimension and the size in signal units of the signal drop.

The radial calibration sub-process constituted by steps 112 and 114 could equivalently be performed on the basis of the second radial displacement. The calibration sub-process need not be carried out in a phase separate from productive operation, but can be carried out during production (online). If multiple irregularities are tracked, non-linear calibration can be performed.

The data recorded in step 112 could alternatively be used for an angular calibration. For this purpose, a reappearing local irregularity is tracked in the recorded first radial displacement data, and the first radial displacement data is scaled in step 114 with respect to the recording-time (or angle) dimension. The scaling of the first radial displacement data is such that the tracked local irregularity reappears with an equal separation in recording time or angle; this is likely to even out any angular speed variations during the recording (step 110). As a by-product, a coarse estimate of the angular velocity can be obtained. The scaling may be described as a dilation or a stretching. In mathematical language, the scaling may correspond to replacing $f(t)$ with $f(\alpha \cdot t)$ in all or part of the recorded data, where the scaling factor $\alpha$ may be less than 1 or greater than 1, or more generally to replacing $f(t)$ with $f(\alpha(t) \cdot t)$, where $\alpha(t)$ is a function of the recording time which is locally less than 1 or greater than 1. The scaling may be non-uniform in the sense that a different scaling factor applies in different periods of the first radial displacement data. To achieve good angular calibration accuracy, it may be advisable to use radial displacement data recorded for at least three revolutions of the shaft 290.

Because the variations in angular speed may be different for the first and second radial displacement data, the angular calibration sub-process constituted by the steps 112 and 114 is preferably performed once for each data set.

Returning to the main embodiment of the method 100, the execution flow continues to a step 116 of providing, on the basis of the first radial displacement, a first shape description representing the shaft's cross section in the relaxed condition. The shape description may be quite simple, such as the recorded radial displacement values in calibrated length units and possibly with annotations indicating the start of each new revolution.

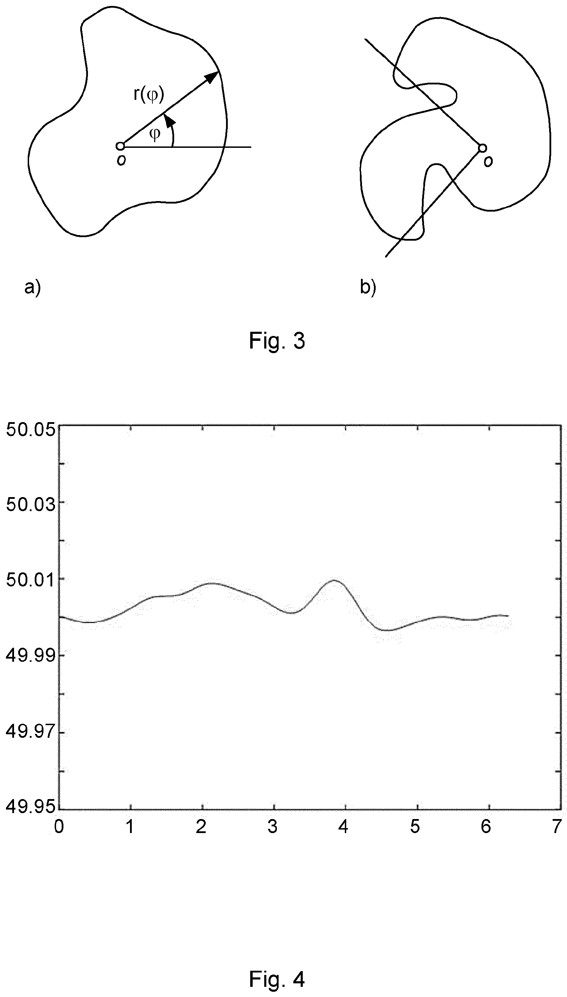

To provide the first shape description, a harmonic-analysis representation can be relied upon, including Fourier series, sine series, cosine series, DFT (discrete Fourier transform) coefficients or FFT (fast Fourier transform) coefficients. A Fourier-series description is well suited for modeling cyclic phenomena. It can be used also to model random cross sections of shafts 290, subject to the very mild condition that the shaft 290 shall have a star-shaped contour. To illustrate, figure 3a shows a two-dimensional geometric point set which is star-shaped relative to the origin O, whereas figure 3b shows a point set which is not star-shaped relative to the origin O. The star-shaped point set can be described in terms of its radius vector $r(\varphi)$, which can be defined as the radius as a function of angle. The radius vector is clearly a periodic function.

It can be stated that all phenomena of a rotating machine are related in one way or another to the angular speed. In the frequency domain, synchronous frequency components repeat at certain angular locations of the rotation and asynchronous do not. However, at approximately constant angular speed, both types of the frequency components can be modelled by Fourier series, i.e., combinations of sine and cosine functions where all the frequencies in the model are determined by one fundamental frequency $\omega_1$ and its harmonics $\omega_m = \omega_1 m$ for $m = 2, 3, ....$ In the case of synchronous frequency components, $\omega_1$ is the angular speed at which the shaft 290 rotates. A mathematical description of the radial displacement signal as a Fourier series can be written as

$$s[n] = \sum_{m=1}^{M} A_m \cos(\omega_m n + \varphi_m) + \varepsilon[n], \qquad (1)$$

where $n$ is the discrete time index, M is the number of harmonics included in the model, $\omega_m = 2\pi v_m$, $A_m$ is an $m$th Fourier coefficient (cosine coefficient), the number $v_m = f_m/f_s$ is the digital frequency, and $\varepsilon[n]$ is a noise term. Frequencies $f_m, f_s$ are the analog signal and sampling frequency, respectively. In the case of asynchronous frequency components, the basic frequency is, for example, one of the bearing fault frequencies. Parameters of the model can be estimated very accurately using Maximum Likelihood estimation (see S. M. Kay, Modern Spectral Estimation: Theory and Application, Englewood Cliffs, New Jersey: Prentice-Hall, 1988).

A mathematical model can be used to correct errors due to the shaft having an uneven shape. Possible model candidates are described in D. Stoyan and H. Stoyan, Fractals, Random Shapes and Point Fields; Methods of Geometrical Statistics, Chichester: John Wiley and Sons, 1994. These models include:

- the cross-section model (for symmetric figure),

- the radius-vector function (for star-shaped figures),

- the support function (mainly for convex figures), and

- the tangent angle function.

A suitable model for the present application is the radius-vector function. Indeed, since the contour of the shaft 290 is not necessarily symmetric, the reference point in the support function model is, by definition, outside of the figure, and the tangent angle function assumes a piecewise smooth surface. To describe the contour of shaft by radius-vector function, a point in the interior of the cross section is chosen. The point may be, for example, the center of the gravity, the center of the smallest circular disc that completely contains the figure, or the intersection of the cross section and the axis of rotation. Then the cross section is translated such that the chosen point lies at the origin O. In a star-shaped cross section, as already seen in figure 3a, each ray starting at O forms only one line segment, whereas in non-star-shaped cross section (figure 3b) there are rays starting at O that cross the boundary more than once.

A useful statistical tool for describing the radius vector of the cross section as a random variable may be the Gaussian random cylinder methodology proposed by Muinonen and Saarinen. The methodology is described in K. Saarinen, K. Muinonen, "Light scattering by wood fibers", Applied Optics, vol. 40 (2001), no. 28, pp. 5064-5077. Another use of this methodology is reported on in K. Muinonen, K. Saarinen, "Ray optics approximation for Gaussian random cylinders", Journal of Quantitative Spectroscopy and Radiative Transfer, vol. 64 (2000), no. 2, pp. 201-218. In the Gaussian random cylinder methodology, the simulated or measured radius vectors are presented using the following Fourier-series model:

$$r(\varphi) = a_0 + \sum_{k=1}^{p} (a_k \cos k\varphi + b_k \sin k\varphi) + \xi, \qquad (2)$$

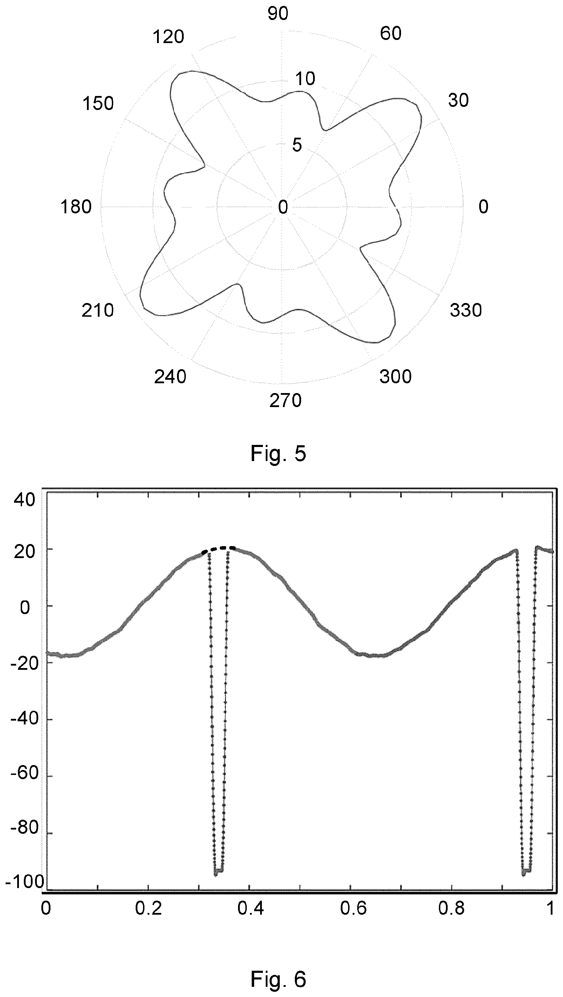

where $\xi = \xi(\varphi)$ represents the modeling error. The coefficient $a_0$ is equal to the mean radius of the contour. An example of measurement error due to random shape of the shaft 290 is presented in figures 4 and 5. The example was generated by a simulation that was based on the following assumptions: perfect displacement sensor 234, 50 mm mean radius and 5 $\mu$m standard deviation for the radius. The resulting maximum error in displacement measurement was close to 20 $\mu$m.

In some embodiments of the method 100, this step 116 further comprises substeps by which local irregularities are removed before the shape description is provided. Such irregularities could otherwise lead to significant errors in a later runout compensation if the synchronization between the measured signal and a runout compensation model is poor. Indeed, poor synchronization may lead to subtraction of values for non-corresponding angles $\varphi$, which produces very noticeable artefacts for a signal with fast variation. In a first substep 116.1, at least one local irregularity is identified in the recorded first radial displacement and, in a second substep 116.2, the local irregularity is replaced with interpolated data, or is replaced with a template shape, or a combination of these replacements is performed. The removal of local irregularities is illustrated in figure 6, where the data points (samples) representing the recorded first radial displacement are plotted as connected small dots as a function of recording time in seconds. The negative spike, which appears to interrupt the approximately sinusoidal fundamental waveform, constitutes the irregularity to be removed, and the dashed line represents the radial displacement after the replacement in the second substep 116.2. In the second substep 116.2, an interpolation may include fitting to the surrounding waveform a polynomial of degree 2, 3 or higher and evaluating it across the irregularity. Alternatively, if substitution of a template shape is used, the shape as seen in the cross-section plane may for example be a circular arc.

In still further embodiments of the method 100, step 116 may further comprise regularizing the recorded first radial displacement. This regularization (or smoothing) may be achieved by numerically convolving the first radial displacement with a kernel that has a non-pointwise support on the real line; especially, a convolution with a smooth kernel can be used. A regularization may also be achieved by piecewise approximating the first radial displacement by low-order polynomials or splines. A regularization according to one of these options may be expected to eliminate undesirable measurement noise. The regularized first radial displacement data will then take the place of the recorded first radial displacement data in the remainder of the method 100.

In a next step 118 of the method 100, a second radial displacement of the shaft's surface is recorded while rotating the shaft 290 at the second angular speed. As explained above, the second angular speed corresponds to the loaded condition of the shaft 290. The recording may be performed by storing the signal temporarily in the memory 216.

After this, in a step 120, a second shape description representing the shaft's cross section in the loaded condition is provided on the basis of the second radial displacement. The second shape description has a representation or format that is compatible with the representation or format that was used for the first shape description. The representation should allow a comparison with the first shape description and/or a reuse of calibration data prepared for the first shape description and/or a subtraction operation applied to the first and second shape descriptions.

Substeps 120.1, 120.2 can be carried out on the recorded second radial displacement data in analogy with the above-described substeps 116.1, 116.2, just like radial calibration, angular calibration and any subsequent regularization.

With the first and second shape descriptions available, the execution flow of the method 100 then proceeds to a final step 122 of determining the radial deformation as a difference of the first and second shape descriptions. The difference may be computed, for example as a subtraction of the radius vectors, i.e., the radius values for corresponding angle values are subtracted. Pairs of corresponding angles in the two shape descriptions may be identified using annotations indicating the start of each new revolution, as mentioned above. One of the shape descriptions may in some instances require resampling (e.g., interpolation) to make it suitable for subtraction. The deformation d is obtained as

$$d(\varphi) = r_2(\varphi) - r_1(\varphi),$$

where $r_1$, $r_2$ are the first and second shape descriptions, respectively. If for example step 116 has been carried out in accordance with the Fourier-series approach, it returns as output a shape description on the form corresponding to equation (1), using measured values in shaft-angle coordinates $\varphi$ and a maximum-likelihood estimation algorithm for the parameters. This approach can be used to generate a shape description in shaft angle coordinates for any desired rotational speed. The generated shaft shape signal is subtracted from the resampled measurement signals in shaft-angle coordinates resulting accurate shaft displacement signals.

As explained initially, the (radial) forces acting on the shaft 290 can be derived on the basis of the (radial) deformation.

## Tests

The inventor has carried out experiments in a non-public laboratory at Lappeenranta University of Technology to study the developed shaft shape compensation method. A measurement setup corresponding to the schematic structure in figure 2 was used. To test the shaft shape compensation algorithm, about 0.1 mm layer of metal was smoothly excised from the outer surface of a shaft (coupling). To provide suitable angle references for the method 100, about 200 μm thick metal strip were glued onto the shaft within the coverage of capacitive displacement sensors supplied by Micro-Epsilon Messtechnik, Ortenburg, Germany. The measurement setup included a DL6222 demodulator with integrated preamplifier, a DT6222 capacitive multichannel controller, and two CSE1,25/M12 capacitive displacements sensors. The optimum width of the metal strip is the width of the measuring field of the capacitive sensor, since (in first approximation) the measurement results when the measuring field goes over the metal strip is the convolution of the measuring field strength and rectangular cross-section of the metal strip. Accordingly, a 12 mm wide metal strip for the Micro-Epsilon sensor was attached to the surface of the shaft.

To introduce radial forces, a disc with an asymmetrically positioned mass m was attached to the free end of the shaft. The radius of the disc was several times larger than the radius of the shaft. Theoretically, the addition of a mass m at radial distance $r_m$ will produce a sinusoidally varying force with amplitude

$$F = mr_m\omega_1^2, \qquad\qquad (3)$$

where $\omega_1$ the angular speed of rotation. By plotting the amplitude of the 1st order displacement i.e., the amplitude of the 1st rotation speed harmonic, versus the corresponding unbalance force the correlation between these two variables can be examined. In the test, masses of 5, 10, 15 and 20 grams were used to create unbalances, and different angular speeds were used, as reported in Table 1.

| Table 1 | | | | | | | | | | |
|---|---|---|---|---|---|---|---|---|---|---|
| | m (g) | Angular speed (rpm) | | | | | | | | |
| 1 | 0 | 100 | 352 | 498 | 704 | 996 | 1408 | 2226 | 3148 | 4452 |
| 2 | 5 | 100 | 352 | 498 | 704 | 996 | 1408 | 2226 | 3148 | 4452 |
| 3 | 10 | 100 | 352 | 498 | 704 | 996 | 1574 | 2226 | 3148 | 3856 |
| 4 | 15 | 100 | 352 | 498 | 704 | 996 | 1574 | 1828 | 2226 | 3856 |
| 5 | 20 | 100 | 352 | 498 | 704 | 996 | 1574 | 1828 | 2226 | 2765 |

(continued)

| Table 1 | | | | | | | | | | |
|---|---|---|---|---|---|---|---|---|---|---|
| | m (g) | Angular speed (rpm) | | | | | | | | |
| 6 | 0 | 100 | 352 | 498 | 704 | 996 | 1574 | 1828 | 2226 | 2765 |

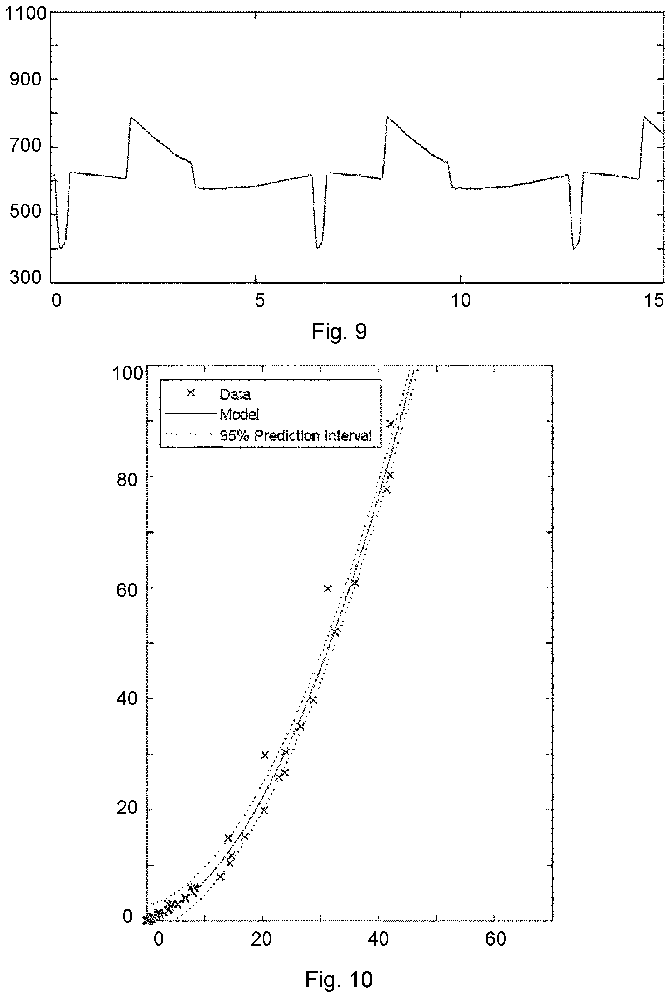

Figures 8 and 9 show examples of measured displacement signals in an x-direction (approximate horizontal) and a y-direction (approximate vertical), respectively. In the experiment, two displacement sensors spaced 90 degrees apart along the perimeter of the disc were used to capture these displacement signals. In figure 8, S is used to indicate the location of a metal strip (which locally reduces the distance from the sensor to the disc surface) and A is used to indicate an artificial runout (area where metal has been ground of the disc surface). The horizontal axes represent shaft angle in radians, and as expected the waveforms A, S reappear every revolution. It is remarked that in other setups, one may use displacement sensors that are directed at the shaft surface rather than at a disc attached to the shaft.

Figures 10 (sensed x-direction) and 11 (sensed y-direction) are plots of the displacement versus the unbalance force according to equation (3), against the horizontal and vertical axes respectively. Recorded data is indicated with a $\times$ symbol, data from the runout compensation model is plotted in solid line together with an associated 95% prediction interval according to said mode. The correlation is excellent, with a determination coefficient of $r^2 = 0.99$ for both the x- and y-directions.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

**Claims**

1.  A method (100) of estimating a radial deformation of a rotary shaft (290) in a loaded condition, comprising:

    recording (110) a first radial displacement of the shaft's surface while rotating the shaft at a first angular speed corresponding to a relaxed condition of the shaft;
    on the basis of the first radial displacement, providing (116) a first shape description representing the shaft's cross section in the relaxed condition;
    recording (118) a second radial displacement of the shaft's surface while rotating the shaft at a second angular speed corresponding to said loaded condition of the shaft;
    tracking a reappearing local irregularity in the recorded first or second radial displacement;
    on the basis of the second radial displacement, providing (120) a second shape description representing the shaft's cross section in the loaded condition; and
    determining (122) the radial deformation as a difference of the first and second shape descriptions,
    **characterized in that** the method further comprises:

    (a) identifying the local irregularity with a structure that has a known radial dimension and scaling (114) the recorded first or second radial displacement to match said known radial dimension; or
    (b) scaling (114) the recorded first or second radial displacement non-uniformly with respect to the recording-time dimension or angle dimension, such that the tracked local irregularity reappears with an equal separation in recording time or angle, to compensate any variations in angular speed between the revolutions.

2.  The method (100) of claim 1, wherein providing the first or second shape description includes:

    identifying (116.1, 120.1) at least one local irregularity in the recorded first or second radial displacement; and
    replacing (116.2, 120.2) the local irregularity with interpolated data and/or with a template shape.

3.  The method (100) of claim 2, wherein the template shape corresponds to a circular arc.

4.  The method (100) of any of the preceding claims, wherein providing the first or second shape description includes regularizing the recorded first or second radial displacement.

5.  The method (100) of any of the preceding claims, which comprises scaling with respect to the recording-time or angle dimension, wherein the first radial displacement is recorded for three or more revolutions.

6. The method (100) of any of the preceding claims, wherein the first or second shape description includes a harmonic-analysis representation.

7. The method (100) of any of the preceding claims, wherein the radial displacement of the shaft's (290) surface is recorded (110, 118) using a contactless sensor (230).

8. The method (100) of claim 7, wherein the radial displacement of the shaft's (290) surface is recorded (110, 118) using a capacitive displacement sensor (234).

9. The method (100) of any of the preceding claims, wherein the radial displacement of the shaft's (290) surface is recorded (110, 118) using a single sensor (234).

10. The method (100) of any of the preceding claims, wherein the shaft (290) has a nominally circular cross section.

11. A processor (212) configured to estimate a radial deformation of a rotary shaft (290) in a loaded condition, the processor being communicatively connected to:

a motor (220) arranged to rotate the shaft; and
a displacement sensor (234) arranged to record a radial displacement of the shaft,
wherein the processor is configured to:

record a first radial displacement of the shaft's surface while the shaft rotates at a first angular speed corresponding to a relaxed condition of the shaft;
provide, on the basis of the first radial displacement, a first shape description representing the shaft's cross section in the relaxed condition;
record a second radial displacement of the shaft's surface while the shaft rotates at a second angular speed corresponding to said loaded condition of the shaft;
track a reappearing local irregularity in the recorded first or second radial displacement;
provide, on the basis of the second radial displacement, a second shape description representing the shaft's cross section in the loaded condition; and
determine the radial deformation as a difference of the first and second shape descriptions,
**characterized in that** the processor is further configured to:

(a) identify the local irregularity with a structure that has a known radial dimension and scale the recorded first or second radial displacement to match said known radial dimension; or
(b) scale the recorded first or second radial displacement non-uniformly with respect to the recording-time dimension or angle dimension, such that the tracked local irregularity reappears with an equal separation in recording time or angle, to compensate any variations in angular speed between the revolutions.

12. A computer program (218) comprising instructions to cause the processor (212) of claim 11 to execute the steps of the method of any of claims 1 to 10.

**Patentansprüche**

1. Verfahren (100) zum Schätzen einer radialen Verformung einer Drehwelle (290) in einem belasteten Zustand, umfassend:

Aufzeichnen (110) einer ersten radialen Verschiebung der Oberfläche der Welle, während die Welle mit einer ersten Winkelgeschwindigkeit gedreht wird, die einem entspannten Zustand der Welle entspricht;
auf der Grundlage der ersten radialen Verschiebung Bereitstellen (116) einer ersten Formbeschreibung, die den Querschnitt der Welle in dem entspannten Zustand darstellt;
Aufzeichnen (118) einer zweiten radialen Verschiebung der Oberfläche der Welle, während die Welle mit einer zweiten Winkelgeschwindigkeit gedreht wird, die dem belasteten Zustand der Welle entspricht;
Verfolgen einer wiederkehrenden lokalen Unregelmäßigkeit in der aufgezeichneten ersten oder zweiten radialen Verschiebung;

basierend auf der zweiten radialen Verschiebung, Bereitstellen (120) einer zweiten Formbeschreibung, die den Querschnitt der Welle in dem belasteten Zustand darstellt; und

Bestimmen (122) der radialen Verformung als eine Differenz der ersten und zweiten Formbeschreibung, **dadurch gekennzeichnet, dass** das Verfahren ferner Folgendes umfasst:

(a) Identifizieren der lokalen Unregelmäßigkeit mit einer Struktur, die eine bekannte radiale Abmessung aufweist, und Skalieren (114) der aufgezeichneten ersten oder zweiten radialen Verschiebung, um mit der bekannten radialen Abmessung übereinzustimmen; oder

(b) in Bezug auf die Aufzeichnungszeitabmessung oder Winkelabmessung ungleichmäßig Skalieren (114) der aufgezeichneten ersten oder zweiten radialen Verschiebung, so dass die verfolgte lokale Unregelmäßigkeit mit einem gleichen Abstand in der Aufzeichnungszeit oder dem Winkel wieder auftritt, um jegliche Variationen der Winkelgeschwindigkeit zwischen den Umdrehungen auszugleichen.

2.  Verfahren (100) nach Anspruch 1, wobei das Bereitstellen der ersten oder zweiten Formbeschreibung Folgendes beinhaltet:

Identifizieren (116.1, 120.1) mindestens einer lokalen Unregelmäßigkeit in der aufgezeichneten ersten oder zweiten radialen Verschiebung und

Ersetzen (116.2, 120.2) der lokalen Unregelmäßigkeit durch interpolierte Daten und/oder durch eine Schablonenform.

3.  Verfahren (100) nach Anspruch 2, wobei die Schablonenform einem Kreisbogen entspricht.

4.  Verfahren (100) nach einem der vorhergehenden Ansprüche, wobei das Bereitstellen der ersten oder zweiten Formbeschreibung das Regulieren der aufgezeichneten ersten oder zweiten radialen Verschiebung beinhaltet.

5.  Verfahren (100) nach einem der vorhergehenden Ansprüche, das Skalieren in Bezug auf die Aufzeichnungszeit- oder Winkelabmessung umfasst, wobei die erste radiale Verschiebung für drei oder mehr Umdrehungen aufgezeichnet wird.

6.  Verfahren (100) nach einem der vorhergehenden Ansprüche, wobei die erste oder zweite Formbeschreibung eine harmonische Analysedarstellung beinhaltet.

7.  Verfahren (100) nach einem der vorhergehenden Ansprüche, wobei die radiale Verschiebung der Oberfläche der Welle (290) unter Verwendung eines kontaktlosen Sensors (230) aufgezeichnet wird (110, 118).

8.  Verfahren (100) nach Anspruch 7, wobei die radiale Verschiebung der Oberfläche der Welle (290) unter Verwendung eines kapazitiven Verschiebungssensors (234) aufgezeichnet wird (110, 118).

9.  Verfahren (100) nach einem der vorhergehenden Ansprüche, wobei die radiale Verschiebung der Oberfläche der Welle (290) unter Verwendung eines einzigen Sensors (234) aufgezeichnet wird (110, 118).

10. Verfahren (100) nach einem der vorhergehenden Ansprüche, wobei die Welle (290) einen nominell kreisförmigen Querschnitt aufweist.

11. Prozessor (212), der dazu ausgelegt ist, eine radiale Verformung einer Drehwelle (290) in einem belasteten Zustand zu schätzen, wobei der Prozessor kommunikativ verbunden ist mit:

einem Motor (220), der angeordnet ist, um die Welle zu drehen; und

einem Verschiebungssensor (234), der angeordnet ist, um eine radiale Verschiebung der Welle aufzuzeichnen, wobei der Prozessor ferner zu Folgendem ausgelegt ist:

Aufzeichnen einer ersten radialen Verschiebung der Oberfläche der Welle, während sich die Welle mit einer ersten Winkelgeschwindigkeit dreht, die einem entspannten Zustand der Welle entspricht;

basierend auf der ersten radialen Verschiebung Bereitstellen einer ersten Formbeschreibung, die den Querschnitt der Welle in dem entspannten Zustand darstellt;

Aufzeichnen einer zweiten radialen Verschiebung der Oberfläche der Welle, während sich die Welle mit einer zweiten Winkelgeschwindigkeit dreht, die dem belasteten Zustand der Welle entspricht;

Verfolgen einer wiederkehrenden lokalen Unregelmäßigkeit in der aufgezeichneten ersten oder zweiten radialen Verschiebung;

basierend auf der zweiten radialen Verschiebung Bereitstellen einer zweiten Formbeschreibung, die den Querschnitt der Welle in dem belasteten Zustand repräsentiert; und

Bestimmen der radialen Verformung als eine Differenz der ersten und zweiten Formbeschreibung, **dadurch gekennzeichnet, dass** der Prozessor ferner zu Folgendem ausgelegt ist:

(a) Identifizieren der lokalen Unregelmäßigkeit mit einer Struktur, die eine bekannte radiale Abmessung aufweist, und Skalieren der aufgezeichneten ersten oder zweiten radialen Verschiebung, um mit der bekannten radialen Abmessung übereinzustimmen; oder

(b) in Bezug auf die Aufzeichnungszeitabmessung oder Winkelabmessung ungleichmäßig Skalieren der aufgezeichneten ersten oder zweiten radialen Verschiebung, so dass die verfolgte lokale Unregelmäßigkeit mit einem gleichen Abstand in der Aufzeichnungszeit oder dem Winkel wieder auftritt, um jegliche Variationen der Winkelgeschwindigkeit zwischen den Umdrehungen zu auszugleichen.

12. Computerprogramm (218), das Anweisungen umfasst, um den Prozessor (212) nach Anspruch 11 dazu zu veranlassen, die Schritte des Verfahrens nach einem der Ansprüche 1 bis 10 auszuführen.

## Revendications

1. Procédé (100) d'estimation d'une déformation radiale d'un arbre rotatif (290) dans un état chargé, comprenant :

l'enregistrement (110) d'un premier déplacement radial de la surface de l'arbre tout en mettant en rotation l'arbre à une première vitesse angulaire correspondant à un état relâché de l'arbre ;

sur la base du premier déplacement radial, la fourniture (116) d'une première description de forme représentant la section transversale de l'arbre dans l'état relâché ;

l'enregistrement (118) d'un deuxième déplacement radial de la surface de l'arbre tout en mettant en rotation l'arbre à une deuxième vitesse angulaire correspondant audit état chargé de l'arbre ;

le suivi d'une irrégularité locale réapparaissant dans le premier ou le deuxième déplacement radial enregistré ;

sur la base du deuxième déplacement radial, la fourniture (120) d'une deuxième description de forme représentant la section transversale de l'arbre dans l'état chargé ; et

la détermination (122) de la déformation radiale en tant que différence des première et deuxième descriptions de forme,

**caractérisé en ce que** le procédé comprend en outre :

(a) l'identification de l'irrégularité locale avec une structure qui a une dimension radiale connue et la mise à l'échelle (114) du premier ou du deuxième déplacement radial enregistré pour qu'il corresponde à ladite dimension radiale connue ; ou

(b) la mise à l'échelle (114) du premier ou du deuxième déplacement radial enregistré de manière non uniforme par rapport à la dimension de temps d'enregistrement ou à la dimension d'angle, de telle sorte que l'irrégularité locale suivie réapparaisse avec une séparation égale dans l'angle ou le temps d'enregistrement, pour compenser toutes variations de vitesse angulaire entre les révolutions.

2. Procédé (100) selon la revendication 1, dans lequel la fourniture de la première ou de la deuxième description de forme inclut :

l'identification (116.1, 120.1) d'au moins une irrégularité locale dans le premier ou le deuxième déplacement radial enregistré ; et

le remplacement (116.2, 120.2) de l'irrégularité locale par des données interpolées et/ou par une forme de gabarit.

3. Procédé (100) selon la revendication 2, dans lequel la forme de gabarit correspond à un arc circulaire.

4. Procédé (100) selon l'une quelconque des revendications précédentes, dans lequel la fourniture de la première ou de la deuxième description de forme inclut la régularisation du premier ou du deuxième déplacement radial enregistré.

5. Procédé (100) selon l'une quelconque des revendications précédentes, qui comprend une mise à l'échelle par rapport au temps d'enregistrement ou à la dimension d'angle, dans lequel le premier déplacement radial est enregistré pour trois révolutions ou plus.

6. Procédé (100) selon l'une quelconque des revendications précédentes, dans lequel la première ou la deuxième description de forme inclut une représentation d'analyse harmonique.

7. Procédé (100) selon l'une quelconque des revendications précédentes, dans lequel le déplacement radial de la surface de l'arbre (290) est enregistré (110, 118) à l'aide d'un capteur (230) sans contact.

8. Procédé (100) selon la revendication 7, dans lequel le déplacement radial de la surface de l'arbre (290) est enregistré (110, 118) à l'aide d'un capteur (234) de déplacement capacitif.

9. Procédé (100) selon l'une quelconque des revendications précédentes, dans lequel le déplacement radial de la surface de l'arbre (290) est enregistré (110, 118) à l'aide d'un capteur (234) unique.

10. Procédé (100) selon l'une quelconque des revendications précédentes, dans lequel l'arbre (290) a une section transversale nominalement circulaire.

11. Processeur (212) configuré pour estimer une déformation radiale d'un arbre rotatif (290) dans un état chargé, le processeur étant connecté de manière à pouvoir communiquer à :

un moteur (220) agencé pour mettre l'arbre en rotation l'arbre ; et
un capteur (234) de déplacement agencé pour enregistrer un déplacement radial de l'arbre,
dans lequel le processeur est configuré pour :

enregistrer un premier déplacement radial de la surface de l'arbre tandis que l'arbre est en rotation à une première vitesse angulaire correspondant à un état relâché de l'arbre ;
fournir, sur la base du premier déplacement radial, une première description de forme représentant la section transversale de l'arbre dans l'état relâché ;
enregistrer un deuxième déplacement radial de la surface de l'arbre tandis que l'arbre est en rotation à une deuxième vitesse angulaire correspondant audit état chargé de l'arbre ;
suivre une irrégularité locale réapparaissant dans le premier ou le deuxième déplacement radial enregistré ;
fournir, sur la base du deuxième déplacement radial, une deuxième description de forme représentant la section transversale de l'arbre dans l'état chargé ; et
déterminer la déformation radiale en tant que différence des première et deuxième descriptions de forme, **caractérisé en ce que** le processeur est en outre configuré pour :

(a) identifier l'irrégularité locale avec une structure qui a une dimension radiale connue et mettre à l'échelle le premier ou le deuxième déplacement radial enregistré pour qu'il corresponde à ladite dimension radiale connue ; ou
(b) mettre à l'échelle le premier ou le deuxième déplacement radial enregistré de manière non uniforme par rapport à la dimension de temps d'enregistrement ou à la dimension d'angle, de telle sorte que l'irrégularité locale suivie réapparaisse avec une séparation égale dans l'angle ou le temps d'enregistrement, pour compenser toutes variations de vitesse angulaire entre les révolutions.

12. Programme informatique (218) comprenant des instructions pour amener le processeur (212) de la revendication 11 à exécuter les étapes du procédé selon l'une quelconque des revendications 1 à 10.

Fig. 1

Fig. 2

a)                                        b)

Fig. 3

Fig. 4

Fig. 5

Fig. 6

Fig. 7

Fig. 8

Fig. 9

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10213110632 A1
- CN 112504155 B
- US 2022325372 A1
- JP H11230733 A
- EP 2218881 A1

**Non-patent literature cited in the description**

- **S. M. KAY**. Modern Spectral Estimation: Theory and Application, Englewood Cliffs, New Jersey. Prentice-Hall, 1988
- **D. STOYAN** ; **H. STOYAN**. Fractals, Random Shapes and Point Fields; Methods of Geometrical Statistics, Chichester. John Wiley and Sons, 1994
- **K. SAARINEN** ; **K. MUINONEN**. Light scattering by wood fibers. *Applied Optics*, 2001, vol. 40 (28), 5064-5077
- **K. MUINONEN** ; **K. SAARINEN**. Ray optics approximation for Gaussian random cylinders. *Journal of Quantitative Spectroscopy and Radiative Transfer*, 2000, vol. 64 (2), 201-218